# EUROPÄISCHE PATENTSCHRIFT

(11) **EP 2 941 373 B1**
(45) Veröffentlichungstag und Bekanntmachung des Hinweises auf die Patenterteilung: **13.09.2017**
(21) Anmeldenummer: 13814529.7
(22) Anmeldetag: 19.12.2013
(51) Int. Cl.: B60T 11/26

(54) **DRUCKMITTELBEHÄLTER FÜR EINE HYDRAULISCHE KRAFTFAHRZEUGBREMSANLAGE**
PRESSURE MEDIUM CONTAINER FOR A HYDRAULIC MOTOR VEHICLE BRAKE SYSTEM
RÉSERVOIR DE FLUIDE SOUS PRESSION POUR SYSTÈME DE FREINAGE HYDRAULIQUE DE VÉHICULE AUTOMOBILE

(30) Priorität: 07.01.2013 DE 102013000041; 28.03.2013 DE 102013005375
(43) Veröffentlichungstag der Anmeldung: 11.11.2015
(73) Patentinhaber: Continental Teves AG & Co. OHG, 60488 Frankfurt (DE)
(72) Erfinder: OTTMANN, Swen, 60488 Frankfurt (DE); NEUMANN, Hans-Jürgen, 65428 Rüsselsheim (DE); KREBS, Werner, 65582 Hambach (DE); SCHLICHT, Stephan, 64569 Nauheim (DE); SCHIEL, Christoph, 61231 Bad Nauheim (DE)
(86) Internationale Anmeldenummer: PCT/EP2013/077333
(87) Internationale Veröffentlichungsnummer: WO 2014/106588

(56) Entgegenhaltungen:
- DE-A1-102011 104 394
- DE-B3-102010 010 412
- GB-A- 2 254 317
- US-A1- 2003 062 371

## Beschreibung

Die Erfindung betrifft einen Druckmittelbehälter für eine hydraulische Kraftfahrzeugbremsanlage, mit den Merkmalen nach dem Oberbegriff des Anspruchs 1.

### Stand der Technik:

Druckmittelbehälter für hydraulische Kraftfahrzeugbremsanlagen sind bekannt. Üblicherweise werden derartige Druckmittelbehälter im Motorraum an einem Hauptbremszylinder direkt montiert oder zumindest über Leitungen mit diesem hydraulisch verbunden. Bei vielen Fahrzeugvarianten zwingen die vorhandenen Einbauverhältnisse im Motorraum zu Druckmittelbehältern, welche eher langgestreckt statt würfelförmig ausgebildet sind, weil beispielsweise Frontscheiben mit einem flachen Neigungswinkel und gleichzeitig immer kompaktere Bauweise einer Bremsbetätigungsanlage dazu führen, dass Druckmittelbehälter unter dem Wasserkasten angeordnet werden müssen.

Um die Befülleinrichtung zur Vakuum- bzw. Druckbefüllung am Band aufnehmen zu können, ist durch eine solche Anordnung der Einfüllstutzen meist in Fahrtrichtung vorne beziehungsweise an einem vorderen Ende des Druckmittelbehälters angebracht. Eine derartige dezentrale Anordnung des Einfüllstutzens führt jedoch regelmäßig dazu, dass im Fahrbetrieb, beim Transport, häufig während eines Bremsvorgangs oder beim Parken in einer starken Hangabwärtslage der Einfüllstutzen mit dem Druckmittel überflutet wird.

Die Verschlusskappen gattungsgemäßer Behälter verfügen meist über Vorrichtungen für einen Druckausgleich mit der Umgebungsatmosphäre. Um ein Auslaufen des Druckmittels während der Überflutung des Einfüllstutzens durch eine derartige Druckmittelausgleichsvorrichtung zu verhindern, werden aufwendige Lösungen vorgesehen, welche eine Belüftungsfunktion gewährleisten und ein Herausdringen der Flüssigkeit verhindern sollen, gleichzeitig jedoch die Komplexität und den Herstellaufwand der Verschlusskappe erhöhen. In GB 2 254 317 A wird beispielsweise vorgeschlagen, in der Verschlusskappe neben einem ventilbehafteten Dichtelement eine zusätzliche Innenkappe vorzusehen, welche das Dichtelement von dem Druckmittel abschirmen und dessen direkte Benetzung durch das Druckmittel möglichst verhindern soll.

Daher ist es Aufgabe der Erfindung, die aufgeführten Nachteile zu beseitigen und einen verbesserten Druckmittelbehälter anzubieten welcher einfach und kostengünstig herstellbar und montierbar ist, wobei eine Belüftungsfunktion weiterhin zuverlässig gewährleist und gleichzeitig ein Herausdringen der Flüssigkeit aus dem Druckmittelbehälter durch die Verschlusskappe effektiv verhindert werden sollen.

Die Aufgabe wird erfindungsgemäß mit den Merkmalen des unabhängigen Anspruchs 1 gelöst, indem ein Ventil auf einem Auflagepodest aufgelegt angeordnet wird und dabei richtungsabhängig unterschiedliche Ventilöffnungswiderstande aufweist. Unteransprüche geben Weiterbildungen und weitere mögliche Ausführungsformen an. Hierdurch kann die Luft nach wie vor in beide Richtungen strömen, so dass ein Druckausgleich sicher stattfindet, wogegen das Druckmittel weitgehend zurückgehalten wird um nicht in die Umgebung zu gelangen.

In einer vorteilhaften Weiterbildung der Erfindung kann der Ventilöffnungswiderstand in Richtung Umgebungsatmosphäre höher vorgesehen sein als in die entgegengesetzte Richtung, beispielsweise in Richtung einer Druckmittelkammer innerhalb des Druckmittelbehälters. So kann ein Austreten des Druckmittels aus dem Druckmittelbehälter durch das Ventil effektiv verhindert werden, ohne dass ein Nachsaugen des Druckmittels aus dem Druckmittelbehälter in den Hauptbremszylinder erschwert wird. In einer weiteren Weiterbildung der Erfindung kann das Ventil besonders einfach und effektiv wenigstens einen Schlitz in dem Dichtelement der Verschlusskappe umfassen, so dass es besonders einfach und kostengünstig herstellbar sowie an unterschiedliche Anforderungsprofile anpassbar sein kann.

In einer vorteilhaften Ausführungsform kann der Auflagepodest für den Dichtelement als ein Rohrprofil gestaltet werden, welches sich von einem Boden der Verschlusskappe in Richtung Dichtelement erstreckt und wenigstens einen Luftdurchlass zwischen einer Innenseite und einer Außenseite des Rohrprofils aufweist. Damit können eine zuverlässige Ventilfunktion und Druckausgleichsfunktion besonders einfach sichergestellt werden.

Besonders vorteilhaft kann die Verschlusskappe Stützmittel aufweisen, welche das Ventil in wenigstens eine Ventilöffnungsrichtung stützen und dadurch den Ventilöffnungswiderstand in die gestützte Ventilöffnungsrichtung erhöhen. So können die angestrebte Beeinflussung des Ventilöffnungswiderstandes sowie seine Adaption auf eine besonders effiziente Weise zuverlässig und ohne einer Erhöhung des Montageaufwandes realisiert werden. In einer weiter hin vorteilhaften Weiterbildung können die Stützmittel an dem Boden der Verschlusskappe angeordnet und/oder in die Verschlusskappe integriert, vorzugsweise angeformt, vorgesehen sein. Damit wird eine funktionelle hochintegrierte Verschlusskappe angeboten, welche technologisch einfach, beispielsweise im Spritzverfahren herstellbar ist. Zusätzliche Einzelteile und Montageoperationen werden eingespart. Vorzugsweise können die Stützmittel innerhalb des Auflagepodests angeordnet werden, wodurch die Ventilfunktion besonders einfach beeinflusst und das Ansprechverhalten des Ventils besonders feinfüllig vorgegeben werden kann.

Eine besonders effektive Ausgestaltung der Stützmittel sieht vor, dass diese als ein Rohrprofil ausgebildet sein können, welches sich von dem Boden der Verschlusskappe in Richtung Dichtelement erstreckt und wenigstens einen Luftdurchlass zwischen einer Innenseite und einer Außenseite des Rohrprofils aufweist. Dabei kann in einer anderen Weiterbildung der Erfindung bei einer Druckdifferenz gleich Null zwischen dem Rohrprofil des Stützmittels und dem Dichtelement ein Abstand in Richtung Dichtelement vorgesehen sein. Dadurch kann besonders einfach das Ansprechverhalten des Ventils konstruktiv vorgegeben, vorzugsweise stufenartig oder progressivgestaltet werden.

In weiteren vorteilhaften Ausführungsformen können die Stützmittel auch quaderförmig, plattenförmig, stiftförmig, kegelförmig oder anders gestaltet und seitlich vom Schlitz des Ventils am Boden der Verschlusskappe angeordnet sein. Damit kann eine nahezu beliebige Einflussnahme auf das Ventilverhalten auf eine besonders einfache Weise realisiert werden. Vorteilhafterweise kann der Luftausgleich und somit der Druckausgleich zwischen dem Inneren des Druckmittelbehälters und der Umgebungsatmosphäre besonders einfach und kostengünstig herstellbar über einen in den Boden der Verschlusskappe eingeformten radial verlaufenden Luftkanal sowie eine sich daran anschließende Ausnehmung eines Gewindes am Kragen der Verschlusskappe erfolgen.

Besonders effektiv kann ein Grad der Erhöhung des Ventilöffnungswiderstandes durch einen Stützabstand der Stützmittel vorgegeben werden. Dadurch kann der Druckmittelbehälter durch Veränderung eines einzelnen Parameters effektiv, feinfüllig und mit nur wenig Proliferation an unterschiedliche Anforderungsprofile angepasst werden.

Besonders vorteilhaft und einfach kann eine Druckdifferenz, welche zur Öffnung des Ventils in wenigstens eine Ventilöffnungsrichtung erforderlich ist, durch ein Verhältnis einer Länge des Schlitzes zu einer Dicke des Dichtelements im Bereich des Schlitzes konstruktiv vorgegeben und somit an unterschiedlichste Anwendungsfälle angepasst werden. Dabei ist ein Verhältnis in einem Wertebereich zwischen 4 und 6 vorzuziehen, weil damit eine besonders gute Ventilfunktionalität für einen gattungsgemäßen Behälter erreichbar wird.

### Figurenbeschreibung:

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:
Fig.1 einen auf einem Tandem-Hauptbremszylinder einer hydraulischen Kraftfahrzeugbremsanlage montierten Druckmittelbehälter.
Fig.2. eine erste Ausführungsform einer Verschlusskappe eines erfindungsgemäßen Druckmittelbehälters ohne Dichtelement.
Fig.3 ein Schnittbild eines Einfüllstutzens einer erfindungsgemäßen Ausführungsform des Druckmittelbehälters mit einer Verschlusskappe nach Fig.2.
Fig.4 eine erfindungsgemäße Ausführungsform der Verschlusskappe mit einem montierten Dichtelement.
Fig.5 eine vereinfachte Skizze zur Darstellung der erfindungsgemäßen Ventilfunktion mit dem geschlossenen Ventil (a) sowie geöffneten Ventil bei Luftzutritt (b) und Luftaustritt (c).
Fig.6 Teilansichten von einigen erfindungsgemäßen Ausführungsformen (a-d) eines Stützmittels an einer Verschlusskappe eines Druckmittelbehälters.

### Fig.1

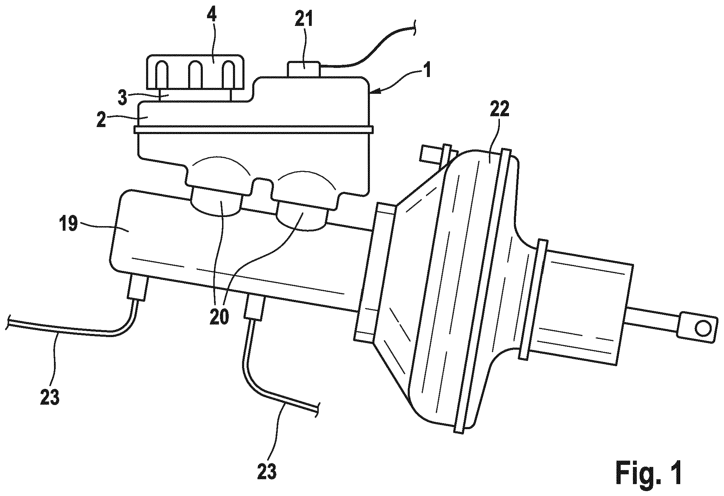

In der Fig.1 ist ein erfindungsgemäßer Druckmittelbehälter 1 mit einem Behältergehäuse 2 abgebildet, welcher mittels zweier Steckverbindungen 20 auf einem Tandem-Hauptbremszylinder 19 einer hydraulischen Kraftfahrzeugbremsanlage montiert und gleichzeitig mit den nicht gezeigten Druckräumen im Hauptbremszylinder 19 hydraulisch verbunden ist. Jedoch sind auch anders gestaltete nicht gezeigte Anbindungen, beispielsweise Remote-Anschlüsse mittels flexibler oder starrer Leitungen oder eine indirekte Anbindung an einen Hauptbremszylinder 19 unter Zwischenschaltung eines weiteren nicht gezeigten Behälters innerhalb der Erfindung möglich. Die nicht gezeigten Druckräume des Hauptbremszylinders 19 sind über Bremsleitungen 23 an Radbremsen oder Bremsregelungsaggregate hydraulisch angebunden. Das Behältergehäuse verfügt über einen Einfüllstutzen 3 welcher zum Befüllen des Druckmittelbehälters geeignet ist und durch eine Verschlusskappe 4 vorzugsweise mittels einer Gewindeverbindung versschließbar ist. Weitere Verbindungen wie beispielsweise eine Bajonettverbindung oder eine einfache Steckverbindung sind ebenso realisierbar, ohne die Erfindung zu verlassen.

Ferner kann das Druckmittelbehälter 1 über Füllstandssensorik 21 sowie weitere nicht gezeigte Hilfsvorrichtungen verfügen. Dem Hauptbremszylinder 19 ist pneumatischer Bremskraftverstärker 22 zugeordnet, jedoch ist die Erfindung ebenso mit einem nicht gezeigten elektrohydraulischen, kombinierten oder weiteren kraftverstärkenden Vorrichtungen realisierbar.

### Fig.2

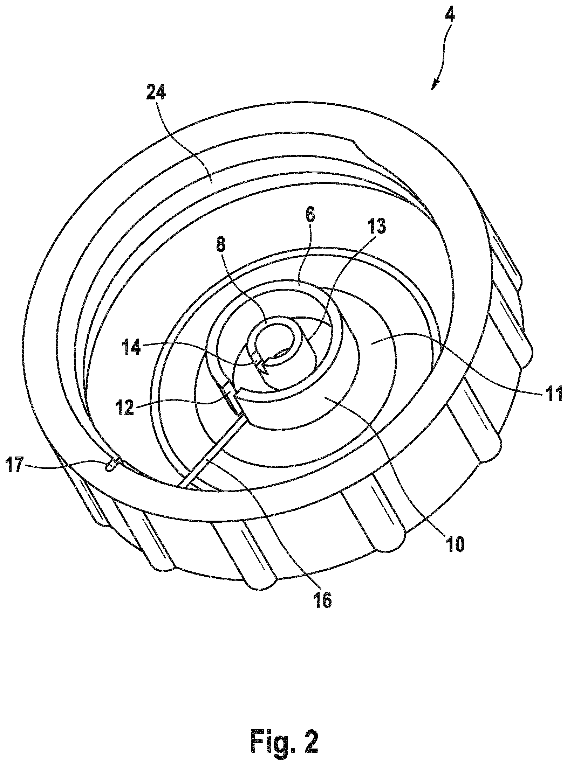

In der Fig.2 ist eine erste Ausführungsform einer Verschlusskappe 4 eines erfindungsgemäßen Druckmittelbehälters 1 abgebildet. Die Verschlusskappe 4 ist im Wesentlichen topfförmig ausgebildet mit einem Boden 11 und einem umlaufenden Kragen, an welchem ein Gewinde 24 angeordnet ist. Das Gewinde 24 dient zum Befestigen der Verschlusskappe 4 an dem Einfüllstutzen 3 und korrespondiert mit einem nicht dargestellten Gewinde am Einfüllstutzen 3. Ein Dichtelement ist hier zwecks eines besseren Verständnisses des Aufbaus der Verschlusskappe 4 nicht dargestellt. Um einen Druckausgleich mit der Umgebungsatmosphäre nach der Montage der Verschlusskappe 4 auf dem Einfüllstutzen 3 zu ermöglichen, weist die Verschlusskappe 4 eine Luftkanal 16 auf, welcher in den Boden 11 der Verschlusskappe 4 eingelassen ist und mit einer Ausnehmung 17 im Gewinde 24 verbunden ist. Vorzugsweise können sowohl der Luftkanal 16 als auch die Ausnehmung 17 als eine Nut ausgebildet sein, jedoch sind auch weitere Ausgestaltungen innerhalb der gleichen Erfindung möglich, beispielsweise als ein in der Verschlusskappe eingelassener rohrförmiger Kanal oder ein einfacher Durchbruch durch die Verschlusskappe.

Zur Auflage des hier nicht gezeigten Dichtelements 5 ist ein Auflagepodest 6 vorgesehen, auf dessen Funktion weiter detailliert eingegangen wird. Der Auflagepodest 6 ist hier als ein Rohrprofil 10 ausgestaltet, welches sich vom Boden 11 der Verschlusskappe 4 in Richtung zum hier nicht gezeigten Dichtelements 5 erstreckt, wobei zwischen der radialen Innenseite und Außenseite des Rohrprofils ein Luftdurchlass 12 vorgesehen ist, um den Innenraum des Auflagepodest 6 mit dem Luftkanal 16 pneumatisch zu verbinden und so einen Druckausgleich zu ermöglichen, wenn das Dichtelement 5 auf dem Auflagepodest aufliegt.

Die Verschlusskappe 4 verfügt ferner über ein Stützmittel 8 zum Stützen eines im Dichtelement 5 integrierten Ventils 7. Das Stützmittel 8 in der hier gezeigten Ausführungsform ist als ein Rohrprofil 13 gestaltet, welches sich vom Boden 11 der Verschlusskappe 4 in Richtung des hier nicht gezeigten Dichtelements 5 erstreckt und innerhalb des Auflagepodests 6 angeordnet ist. Zwischen der Innenseite und der Außenseite des Rohrprofils 13 ist ein Luftdurchlass 14 vorgesehen, um den Innenraum des Rohrprofils 13 mit dem Innenraum des Auflagepodests 6 pneumatisch zu verbinden und so einen Druckausgleich zu ermöglichen, wenn das Dichtelement 5 auf dem Rohrprofil 13 aufliegt. Ein derartiger Aufbau begünstigt eine technologisch besonders effiziente Herstellbarkeit der Verschlusskappe 4, da die meisten Konstruktionselemente im Wesentlichen rotationssymmetrisch gestaltet sind und Hinterschneidungen weitestgehend vermieden werden.

Alternativ zu der abgebildeten Ausführungsform des Stützmittels 8 sind auch weitere Ausgestaltungen innerhalb der Erfindung zulässig, auf die später eingegangen wird.

### Fig.3

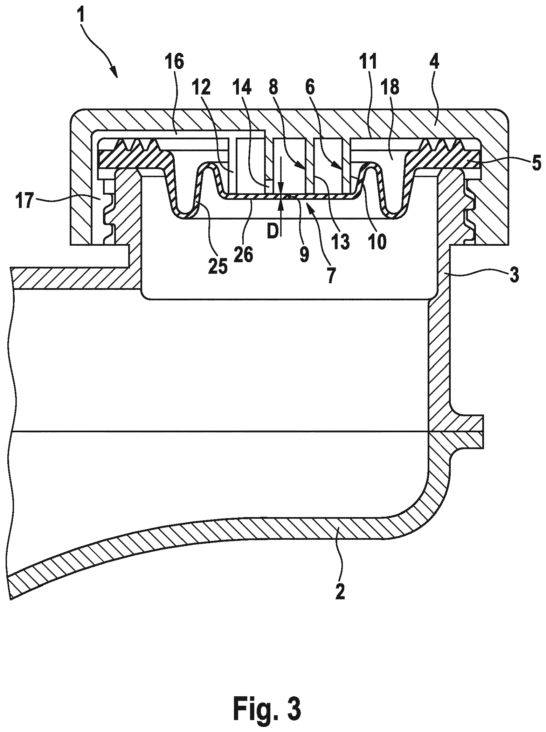

In der Fig.3 ist ein Schnitt durch das Behältergehäuse 2 im Bereich des Einfüllstutzens 3 dargestellt. Auf dem Einfüllstutzen 3 ist eine in der Fig.2 bereits beschriebe Ausführungsform der Verschlusskappe 4 montiert. Zwischen dem Boden 11 und dem Einfüllstutzen 3 ist ein Dichtelement 5 aus einem elastischen, vorzugsweise elastomeren Werkstoff eingeklemmt. Das Dichtelement 5 weist in seiner Mitte eine weitgehend ebene flache Ventilfläche 26 mit einer vorzugsweise konstanten Dicke D auf. In der Mitte der Ventilfläche 26 ist ein Ventil 7 angeordnet, welcher in hier dem gezeigten Ausführungsbeispiel als ein Schlitz 9 ausgebildet ist.

Zwischen dem Boden 11 und dem Dichtelement 5 ist eine Luftkammer 18 begrenzt, welche über den Luftkanal 16 und die Ausnehmung 17 mit der Umgebungsatmosphäre verbunden ist. Das Dichtelement liegt mit dem radialen Außenbereich der Ventilfläche 26 auf dem Auflagepodest 6 auf. Wie bereits vorstehend beschrieben, ist der Auflagepodest 6 durch ein Rohrprofil 10 gebildet, welches einen Luftdurchlass 12 aufweist. Das Rohrprofil 10 erstreckt sich vom Boden 11 der Verschlusskappe 4 bis hin zum Dichtelement 5 im Bereich seiner ebenen Ventilfläche 26 und liegt an diesem an, so dass der Innenraum des Auflagepodests 6 mit dem Dichtelement 5 eine Art Luftkammer begrenzt, welche durch den Luftdurchlass 12 mit dem Luftkanal 16 und somit mit der Umgebungsatmosphäre pneumatisch verbunden ist, so dass auf beiden Seiten der Ventilscheibe 26 eine Druckdifferenz zwischen einem Druck der Umgebungsatmosphäre und einem Druck in einem Innenraum des Druckmittelbehälters 1 aufgebaut werden kann. Bei einer bestimmten definierten Druckdifferenz beginnt die Ventilfläche sich zu verformen und das Ventil 7 öffnet sich. Das Ventil 7 kann in zwei Ventilöffnungsrichtungen öffnen. Eine Ventilöffnungsrichtung entgegengesetzt zum Boden 11 ist aktiv, wenn ein Druck im Inneren des Druckmittelbehälters 1 geringer als ein Druck der Umgebungsatmosphäre ist (Behälterunterdruck). In diesem Fall erfolgt bedingt durch die Druckdifferenz ein Luftzutritt in den Innenraum des Druckmittelbehälters 1 aus dem Innenraum des Auflagepodests 6 beziehungsweise der Umgebungsatmosphäre. Umgekehrt, eine Ventilöffnungsrichtung hin zum Boden 11 ist aktiv, wenn ein Druck im Inneren des Druckmittelbehälters 1 höher als ein Druck der Umgebungsathmosphäre ist (Behälterüberdruck). In diesem Fall erfolgt bedingt durch die Druckdifferenz ein Luftaustritt aus dem Innenraum des Druckmittelbehälters 1 in den Innenraum des Auflagepodests 6 beziehungsweise in die Umgebungsatmosphäre. Weil der Innenraum des Auflagepodestes 6 wie vorstehend beschrieben permanent mit der Umgebungsatmosphäre verbunden ist, kann auf diese Weise zur jeder Zeit auch der Druckausgleich zwischen der Umgebungsatmosphäre und dem Inneren des Druckmittelbehälters 1 erfolgen.

Innerhalb des Rohrprofils 10 des Auflagepodests 6 ist das Stützmittel 8 angeordnet. Das Stützmittel in dem abgebildeten Ausführungsbeispiel ist analog zum Auflagepodest 6 rohrförmig gestaltet, mit einem Rohrprofil 13, welches sich vom Boden 11 der Verschlusskappe 4 in Richtung Dichtelement 5 erstreckt, so dass es die Ventilfläche 26 in eine Richtung zusätzlich stützt, somit eine Verformung der Ventilfläche 26 in Richtung Boden 11 behindert und dadurch den Ventilöffnungswiderstand des Ventils 7 beim Luftaustritt aus dem Druckmittelbehälter 1 erhöht.

Ferner kann das Dichtelement 5 einen Rollmembran 25 aufweisen, um beispielsweise unerwünschten Querspannungen in der Ventilfläche 26 vorzubeugen und so eine bei sämtlichen Druckdifferenzen stets zuverlässig stabile berechenbare Ventilfunktion des Ventils 7 sicherzustellen.

### Fig.4

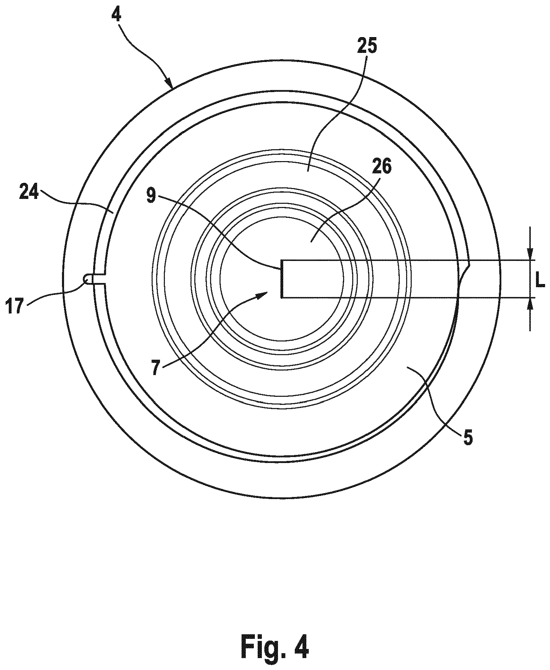

Die Fig.4 zeigt eine erfindungsgemäße Ausführungsform der Verschlusskappe 4 mit dem eingelegten Dichtelement 5 in einer Sicht von Unten in Richtung Boden der Verschlusskappe 4. In dieser Ansicht wird eine möglich grundsätzliche Ausgestaltung des Dichtelements 5 verdeutlicht. Wie ersichtlich verfügt das Dichtelement 5 in seiner radialen Mitte über die runde Ventilfläche 26 welche vom Rollmembran 25 umrandet ist und im Zentrum einen Ventil 7 aufweist. Das Ventil 7 ist im gezeigten Ausführungsbeispiel als ein gerader Schlitz 9 mit einer Schlitzlänge L gestaltet. Dabei entscheidet das Verhältnis der bereits beschriebenen Dicke D des Dichtelements 5 im Bereich der Ventilfläche 26 zu der Schlitzlänge L maßgeblich über ein Ansprechverhalten des Ventils 7, nämlich welche Druckdifferenz mindestens erforderlich ist, damit das Ventil öffnet. Vorzugsweise nimmt das Verhältnis L/D Werte zwischen 4 und 6 ein, wobei auch weitere Wertebereiche funktionell möglich sind. Neben der gezeigten Ausführungsform des Ventils 7 mit einem einzelnen geraden Schlitz 9 sind innerhalb der Erfindung auch weitere Ausgestaltungen möglich, beispielsweise ein Kreuzschlitz, ein gewellter, ein Bogenförmiger oder weitere Schlitzformen.

Ferner ist auf dem Bild die Ausnehmung 17 im Bereich des Gewindes 24 am Kragen der Verschlusskappe 4 ersichtlich, durch welche ein Druckausgleich mit der Umgebungsatmosphäre erfolgt.

### Fig.5

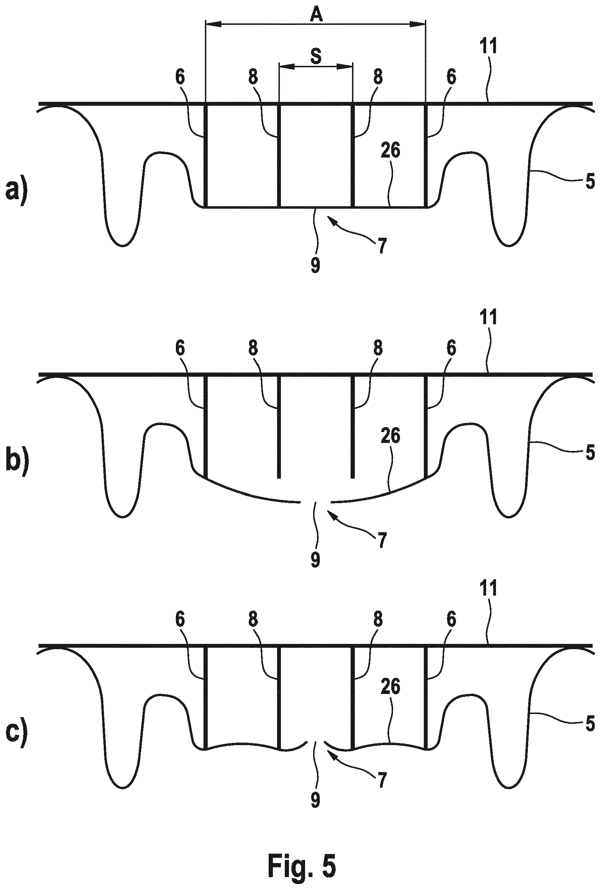

In der Fig. 5 wird schematisch stark vereinfacht und nicht maßstäblich das vorstehend bereits beschriebene Arbeitsprinzip des Ventils 7 verdeutlicht. Bei den erwähnten, jedoch nicht in dieser Figur gezeigten Elementen sei auf die Figuren 1-4 verwiesen.

Die Ansicht a) zeigt das Ventil 7 bei einem ausgeglichenen Druckverhältnis beziehungsweise einer Druckdifferenz gleich null. Dies ist stellt beispielsweise einen generell angestrebten Idealzustand dar oder aber einen Normalzustand bei einem abgestellten Fahrzeug oder einer augenblicklich nicht betriebenen Bremsanlage. Das Dichtelement 5 liegt mit seiner Ventilfläche 26 sowohl auf dem Auflagepodest 6 als auch auf dem Stützmittel 8 auf, die Ventilfläche 26 ist flach und nicht gewölbt, das Ventil 7 ist zu, der Schlitz 9 ist geschlossen.

Die Ansicht b) zeigt das Ventil bei einer negativen anliegenden Druckdifferenz beziehungsweise Behälterunterdruck.

Eine solche Situation ergibt sich beispielsweise bei Saugvorgängen, wenn das Druckmittel aus dem Druckmittelbehälter 1 in den Hauptbremszylinder 19 strömt beziehungsweise von dem Hauptbremszylinder 19 angesaugt wird. Ein Behälterunterdruck bewirkt dabei eine höchst unerwünschte Erhöhung des Saugwiderstandes, weil dadurch Bremsfunktionen negativ beeinflusst werden können. Somit ist im Falle eines Behälterunterdrucks ein besonders spontanes Ansprechen des Ventils 7 bei einer möglichst geringen Druckdifferenz wünschenswert, damit ein Behälterunterdruck möglichst rasch ausgeglichen werden kann.

Wie in der Ansicht b) deutlich zu sehen ist, wölbt sich bei Behälterunterdruck die gesamte Ventilfläche 26 weg vom Boden 11, so dass Ventil 7 auch bei einer relativ geringen Druckdifferenz rasch öffnet und der Schlitz 9 relativ weit auseinander gezogen werden kann.

Die Ansicht c) zeigt das Ventil bei einer positiven anliegenden Druckdifferenz beziehungsweise Behälterüberdruck. Eine solche Situation kann sich beispielsweise ergeben, wenn das Druckmittel im Druckmittelbehälter 1 aufgrund von Fahrzeugbewegungen in Richtung Einfüllstutzen 3 schwappt oder wenn das Fahrzeug sich relativ zu waagerechten stark nach vorne neigt oder wenn sich die Temperatur des Druckmittels relativ schnell erhöht.

Bei einem Behälterüberdruck besteht eine erhöhte Gefahr, dass das meist brennbare Druckmittel aus dem Druckmittelbehälter 1 heraustritt. Dies muss unbedingt vermieden oder zumindest erschwert werden.

Durch die Stützwirkung des Stützmittels 8 wird eine Wölbung der gesamten Ventilfläche 26 verhindert, so dass lediglich eine Verformung der Ventilfläche 26 innerhalb des Stützabstandes S für das Ventil 7 wirksam ist. Weil der Stützabstand S wesentlich geringer als der Auflageabstand A ist, ist auch der Bereich der durch die Druckdifferenz ventilwirksam beaufschlagten Ventilfläche 26 wesentlich geringer als im Falle eines Behälterunterdrucks. Eine höhere Druckdifferenz wird zur Ventilöffnung benötigt, das Ansprechverhalten des Ventils 7 wird verzögert und der Ventilöffnungswiderstand erhöht.

Dabei kann durch Auslegung des Stützabstandes S ein Grad einer relativen Erhöhung des Ventilöffnungswiderstandes bei Behälterüberdruck konstruktiv vorgegeben werden. Ebenso ist es möglich, die die Höhe des Stützmittels 8 relativ zur Höhe des Auflagepodestes 6 zu verändern, so dass zwischen dem Stützmittel 8 und der Ventilfläche 26 bei einem ausgeglichenen Druckverhältnis (siehe Fig.5a) ein Abstand verbleibt. So kann z.B. ein abgestuftes Ansprechverhalten des Ventils erreicht werden - feines Ansprechen bei einer geringen Druckdifferenz zur Beginn, gefolgt von einer starken progressiven Erhöhung des Ventilöffnungswiderstandes bei höheren Druckdifferenzen.

### Fig.6

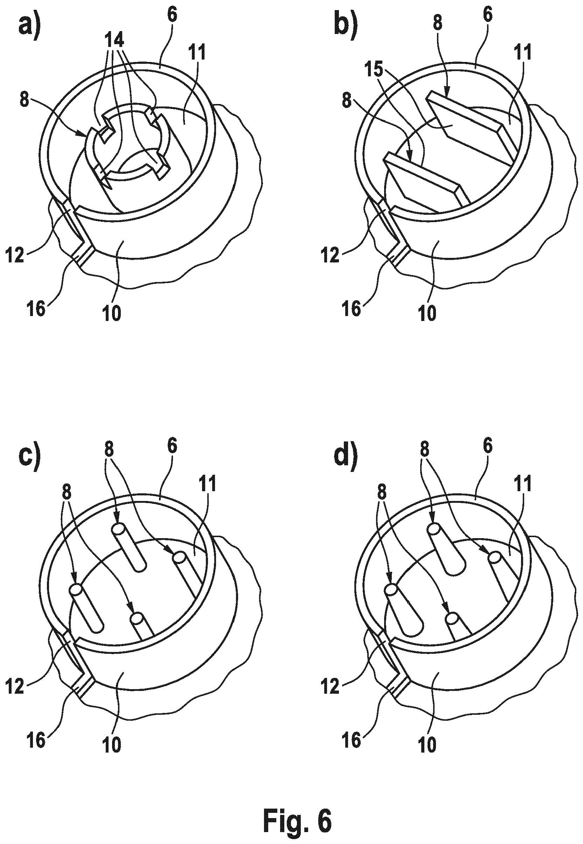

In der Fig.6 sind beispielhaft vier weitere mögliche erfindungsgemäße Ausführungsformen eines Stützmittels 8 dargestellt. Die Ausführungsform des Stützmittels 8 in der Ansicht a ist ebenso wie die bereits in der Fig.2 beschriebene Ausführungsform als ein Rohrprofil ausgestaltet, weist jedoch vier am Umfang verteilte Luftdurchlässe 14 statt nur eines. Es versteht sich, dass auch andere Anzahl von Luftdurchlässen innerhalb der Erfindung möglich ist.

Die Ausführungsform des Stützmittels 8 in der Ansicht b ist aus zwei Quadern 15 beziehungsweise Platten ausgebildet, welche parallel zueinander und jeweils seitlich versetzt zum Schlitz 9 am Boden 11 angeordnet sind. Auch eine weitere Ausführung mit nur einer Platte wäre denkbar.

Die Stützmittel 8 in der Ansicht c sind als stiftförmige Vorsprünge beziehungsweise Erhebungen gestaltet. Die gezeigte Ausführungsform weist vier stiftförmige Stützmittel 8 auf, welche jeweils seitlich versetzt zum Schlitz 9 am Boden 11 angeordnet sind, Es versteht sich, dass auch andere Anzahl von stiftförmigen Stützmitteln 8 innerhalb der Erfindung möglich ist, wobei mehrere solche Stützmittel 8 auch kreisförmig nebeneinander am Boden 11 der Verschlusskappe 4 angeordnet werden können.

Im Unterschied zu der Ausführungsform nach Fig.6c weisen die Stützmittel 8 in der Ansicht d eine Kegelform auf. Vorzugsweise können sämtliche beschriebene Ausführungsformen von Schutzmitteln und Auflagepodesten in die Verschlusskappe einstückig integriert beziehungsweise mit diesem einteilig ausgeführt werden.

### Bezugszeichen:

- 1: Druckmittelbehälter
- 2: Behältergehäuse
- 3: Einfüllstutzen
- 4: Verschlusskappe
- 5: Dichtelement
- 6: Auflagepodest
- 7: Ventil
- 8: Stützmittel
- 9: Schlitz
- 10: Rohrprofil
- 11: Boden der Verschlusskappe
- 12: Luftdurchlass
- 13: Rohrprofil
- 14: Luftdurchlass
- 15: Quader
- 16: Luftkanal
- 17: Ausnehmung
- 18: Luftkammer
- 19: Hauptbremszylinder
- 20: Steckverbindung
- 21: Füllstandsensorik
- 22: Bremskraftverstärker
- 23: Bremsleitung
- 24: Gewinde
- 25: Rollmembran
- 26: Ventilfläche
- D: Dicke des Dichtelements
- L: Länge des Schlitzes
- A: Auflageabstand
- S: Stützabstand

## Patentansprüche

1. Druckmittelbehälter (1) für eine hydraulische Kraftfahrzeugbremsanlage, umfassend ein Behältergehäuse (2) mit einem Einfüllstutzen (3) und einem Innenraum sowie mit einer Verschlusskappe (4), die an dem Einfüllstutzen (3) befestigt ist, wobei die Verschlusskappe (4) einen Boden (11) aufweist und zwischen dem Einfüllstutzen (3) und dem Boden (11) ein Dichtelement (5) aus einem elastomeren Werkstoff vorgesehen ist, wobei das Dichtelement (5) über ein Ventil (7) verfügt, das in einem unbetätigten Ausgangszustand geschlossen ist und druckdifferenzgesteuert in einen geöffneten Betätigungszustand gelangt in dem ein Druckausgleich zwischen einer Umgebungsatmosphäre und dem Innenraum des Druckmittelbehälters (1) vorliegt, **dadurch gekennzeichnet, dass** das Ventil (7) auf einem Auflagepodest (6) aufliegt, der an der Verschlusskappe (4) angeordnet ist, die Verschlusskappe (4) dabei wenigstens ein Stützmittel (8) aufweist, welches das Ventil (7) in wenigstens eine Ventilöffnungsrichtung abstützt und dadurch den Ventilöffnungswiderstand in die abgestützte Ventilöffnungsrichtung erhöht, wodurch das Ventil (7) richtungsabhängig unterschiedliche Ventilöffnungswiderstände aufweist.

2. Druckmittelbehälter (1) nach Anspruch 1 **dadurch gekennzeichnet, dass** der Ventilöffnungswiderstand vom Ventil (7) in Richtung Umgebungsatmosphäre stärker ausgebildet ist als in Richtung Innenraum des Behälters (1).

3. Druckmittelbehälter (1) nach Anspruch 1 **dadurch gekennzeichnet, dass** das Ventil (7) wenigstens einen Schlitz (9) in dem Dichtelement (5) aufweist.

4. Druckmittelbehälter (1) nach Anspruch 1 **dadurch gekennzeichnet, dass** der Auflagepodest (6) als ein Rohrprofil (10) ausgebildet ist, welches sich von dem Boden (11) in Richtung Dichtelement (5) erstreckt und wenigstens einen Luftdurchlass (12) zwischen einer Innenseite und einer Außenseite des Rohrprofils (10) aufweist.

5. Druckmittelbehälter (1) nach Anspruch 1 **dadurch gekennzeichnet, dass** das Stützmittel (8) an dem Boden (11) der Verschlusskappe (4) angeordnet ist.

6. Druckmittelbehälter (1) nach Anspruch 5 **dadurch gekennzeichnet, dass** das Stützmittel (8) in die Verschlusskappe (4) einstückig integriert vorgesehen ist.

7. Druckmittelbehälter (1) nach Anspruch 1 **dadurch gekennzeichnet, dass** das Stützmittel (8) innerhalb des Auflagepodests (6) angeordnet ist.

8. Druckmittelbehälter (1) nach Anspruch 1 **dadurch gekennzeichnet, dass** das Stützmittel (8) als ein Rohrprofil (13) ausgebildet ist, welches sich von dem Boden (11) der Verschlusskappe (4) in Richtung Dichtelement (5) erstreckt und wenigstens einen Luftdurchlass (14) zwischen einer Innenseite und einer Außenseite des Rohrprofils (13) aufweist.

9. Druckmittelbehälter (1) nach Anspruch 3 **dadurch gekennzeichnet, dass** das Stützmittel (8) als wenigstens ein Quader (15) ausgebildet ist, welches sich von dem Boden (11) der Verschlusskappe (4) in Richtung Dichtelement (5) erstreckt und seitlich vom Schlitz (9) angeordnet ist.

10. Druckmittelbehälter (1) nach Anspruch 3 und einem der Ansprüche 5 bis 8 **dadurch gekennzeichnet, dass** das Stützmittel (8) als wenigstens ein stiftförmiger oder kegelförmiger Vorsprung ausgebildet ist, welches sich von dem Boden (11) der Verschlusskappe (4) in Richtung Dichtelement (5) erstreckt und seitlich vom Schlitz (9) angeordnet ist.

11. Druckmittelbehälter (1) nach Anspruch 1 **dadurch gekennzeichnet, dass** der Druckausgleich über einen in den Boden (11) der Verschlusskappe (4) eingeformten radial verlaufenden Luftkanal (16) sowie einer sich daran anschließende Ausnehmung (17) eines Gewindes (24) erfolgt.

12. Druckmittelbehälter (1) nach Anspruch 1 **dadurch gekennzeichnet, dass** der Unterschied der Ventilöffnungswiderstandes durch einen definierten Stützabstand (S) des Stützmittel (8) vorgebbar ist.

13. Druckmittelbehälter (1) nach Anspruch 4 **dadurch gekennzeichnet, dass** das Stützmittel (8) derart gestaltet ist, dass in dem unbetätigten Ausgangszustand des Ventils (7) zwischen dem Dichtelement (5) und dem Stützmittel (8) ein definierter Abstand vorgesehen ist.

14. Druckmittelbehälter (1) nach Anspruch 3 **dadurch gekennzeichnet, dass** eine definierte Druckdifferenz, welche erforderlich ist, um das Ventil (7) in einen geöffneten Betätigungszustand zu versetzen, durch ein Verhältnis einer Länge (L) des Schlitzes (9) zur einer Dicke (D) des Dichtelements (5) im Bereich des Schlitzes (9) vorgebbar ist, wobei das Verhältnis vorzugsweise annähernd einen Wertebereich zwischen 4/1 und 6/1 einnimmt.

## Claims

1. Pressure medium container (1) for a hydraulic motor vehicle brake system comprising a container housing (2) with a filler pipe (3) and an interior, and with a closing cap (4) which is attached to the filler pipe (3), wherein the closing cap (4) has a base (11) and a sealing element (5) of an elastomer material is arranged between the filler pipe (3) and the base (11), wherein the sealing element (5) has a valve (7) which is closed in an unactuated starting state and, controlled by pressure difference, enters an opened actuated state in which a pressure equalization takes place between a surrounding atmosphere and the interior of the pressure medium container (1), **characterized in that** the valve (7) rests on a bearing pedestal (6) which is arranged on the closing cap (4), the closing cap (4) here has at least one support means (8) which supports the valve (7) in at least one valve opening direction and thus increases the valve opening resistance in the supported valve opening direction, whereby the valve (7) has different valve opening resistances depending on direction.

2. Pressure medium container (1) according to Claim 1, **characterized in that** the valve opening resistance of the valve (7) is set greater in the direction of the surrounding atmosphere than in the direction of the interior of the container (1).

3. Pressure medium container (1) according to Claim 1, **characterized in that** the valve (7) has at least one slot (9) in the sealing element (5).

4. Pressure medium container (1) according to Claim 1, **characterized in that** the bearing pedestal (6) is configured as a tubular profile (10) which extends from the base (11) in the direction of the sealing element (5) and has at least one air passage (12) between an inside and an outside of the tubular profile (10).

5. Pressure medium container (1) according to Claim 1, **characterized in that** the support means (8) is arranged on the base (11) of the closing cap (4).

6. Pressure medium container (1) according to Claim 5, **characterized in that** the support means (8) is provided as an integral part of the closing cap (4).

7. Pressure medium container (1) according to Claim 1, **characterized in that** the support means (8) is arranged inside the bearing pedestal (6).

8. Pressure medium container (1) according to Claim 1, **characterized in that** the support means (8) is configured as a tubular profile (13) which extends from the base (11) of the closing cap (4) in the direction of the sealing element (5) and has at least one air passage (14) between an inside and an outside of the tubular profile (13).

9. Pressure medium container (1) according to Claim 3, **characterized in that** the support means (8) is configured as at least one cube (15) which extends from the base (11) of the closing cap (4) in the direction of the sealing element (5) and is arranged at the side of the slot (9).

10. Pressure medium container (1) according to Claim 3 and any of Claims 5 to 8, **characterized in that** the support means (8) is configured as at least one pin-like or conical protrusion which extends from the base (11) of the closing cap (4) in the direction of the sealing element (5) and is arranged at the side of the slot (9).

11. Pressure medium container (1) according to Claim 1, **characterized in that** the pressure equalization takes place via a radially running air channel (16) formed in the base (11) of the closing cap (4) and via a recess (17) of a thread (24) connected thereto.

12. Pressure medium container (1) according to Claim 1, **characterized in that** the difference in valve opening resistance can be predefined by a defined support distance (S) of the support means (8).

13. Pressure medium container (1) according to Claim 4, **characterized in that** the support means (8) is configured such that in the unactuated starting state of the valve (7), a defined distance is provided between the sealing element (5) and the support means (8).

14. Pressure medium container (1) according to Claim 3, **characterized in that** a defined pressure difference, which is necessary to move the valve (7) into an opened actuating state, can be predefined by a ratio of a length (L) of the slot (9) to a thickness (D) of the sealing element (5) in the region of the slot (9), wherein the ratio preferably assumes approximately a value range of between 4/1 and 6/1.

## Revendications

1. Réservoir de fluide sous pression (1) pour une installation de freinage hydraulique d'un véhicule automobile, comprenant un boîtier de réservoir (2) avec une tubulure de remplissage (3) et un espace interne ainsi qu'un capuchon de fermeture (4) qui est fixé à la tubulure de remplissage (3), le capuchon de fermeture (4) présentant un fond (11) et un élément d'étanchéité (5) en matériau élastomère étant prévu entre la tubulure de remplissage (3) et le fond (11), l'élément d'étanchéité (5) disposant d'une soupape (7) qui, dans un état de départ non actionné est fermée et qui, commandée par la différence de pression, parvient dans un état d'actionnement ouvert dans lequel existe un équilibre de pression entre une atmosphère environnante et l'espace interne du réservoir de fluide sous pression (1), **caractérisé en ce que** la soupape (7) repose sur une embase d'appui (6) qui est disposée sur le capuchon de fermeture (4), le capuchon de fermeture (4) présentant en l'occurrence au moins un moyen de support (8) qui supporte la soupape (7) dans au moins une direction d'ouverture de soupape et qui augmente de ce fait la résistance d'ouverture de la soupape dans la direction d'ouverture de la soupape supportée, de sorte que la soupape (7) présente, en fonction de la direction, des résistances d'ouverture de soupape différentes.

2. Réservoir de fluide sous pression (1) selon la revendication 1, **caractérisé en ce que** la résistance d'ouverture de la soupape (7) est plus importante dans la direction de l'atmosphère environnante que dans la direction de l'espace interne du réservoir (1).

3. Réservoir de fluide sous pression (1) selon la revendication 1, **caractérisé en ce que** la soupape (7) présente au moins une fente (9) dans l'élément d'étanchéité (5).

4. Réservoir de fluide sous pression (1) selon la revendication 1, **caractérisé en ce que** l'embase d'appui (6) est réalisée sous forme de profilé tubulaire (10) qui s'étend depuis le fond (11) dans la direction de l'élément d'étanchéité (5) et qui présente au moins un passage d'air (12) entre un côté intérieur et un côté extérieur du profilé tubulaire (10).

5. Réservoir de fluide sous pression (1) selon la revendication 1, **caractérisé en ce que** le moyen de support (8) est disposé sur le fond (11) du capuchon de fermeture (4).

6. Réservoir de fluide sous pression (1) selon la revendication 5, **caractérisé en ce que** le moyen de support (8) est prévu dans le capuchon de fermeture (4) de manière intégrée d'une seule pièce.

7. Réservoir de fluide sous pression (1) selon la revendication 1, **caractérisé en ce que** le moyen de support (8) est disposé à l'intérieur de l'embase d'appui (6).

8. Réservoir de fluide sous pression (1) selon la revendication 1, **caractérisé en ce que** le moyen de support (8) est réalisé sous forme de profilé tubulaire (13) qui s'étend depuis le fond (11) du capuchon de fermeture (4) dans la direction de l'élément d'étanchéité (5) et qui présente au moins un passage d'air (14) entre un côté intérieur et un côté extérieur du profilé tubulaire (13).

9. Réservoir de fluide sous pression (1) selon la revendication 3, **caractérisé en ce que** le moyen de support (8) est réalisé sous forme d'au moins un parallélépipède (15) qui s'étend depuis le fond (11) du capuchon de fermeture (4) dans la direction de l'élément d'étanchéité (5) et qui est disposé latéralement à la fente (9).

10. Réservoir de fluide sous pression (1) selon la revendication 3, et selon l'une quelconque des revendications 5 à 8, **caractérisé en ce que** le moyen de support (8) est réalisé sous forme d'au moins une saillie en forme de goupille ou en forme de cône, qui s'étend depuis le fond (11) du capuchon de fermeture (4) dans la direction de l'élément d'étanchéité (5) et qui est disposée latéralement à la fente (9).

11. Réservoir de fluide sous pression (1) selon la revendication 1, **caractérisé en ce que** l'équilibre de pression s'établit par le biais d'un canal d'air (16) s'étendant radialement et formé dans le fond (11) du capuchon de fermeture (4) ainsi que d'un évidement (17) d'un filetage (24) s'y raccordant.

12. Réservoir de fluide sous pression (1) selon la revendication 1, **caractérisé en ce que** la différence de résistance d'ouverture de soupape peut être prédéfinie par un espace de support défini (S) du moyen de support (8).

13. Réservoir de fluide sous pression (1) selon la revendication 4, **caractérisé en ce que** le moyen de support (8) est configuré de telle sorte que dans l'état de départ non actionné de la soupape (7), une distance définie soit prévue entre l'élément d'étanchéité (5) et le moyen de support (8).

14. Réservoir de fluide sous pression (1) selon la revendication 3, **caractérisé en ce qu'**une différence de pression définie, qui est nécessaire pour déplacer la soupape (7) dans un état d'actionnement ouvert, peut être prédéfinie par un rapport d'une longueur (L) de la fente (9) à une épaisseur (D) de l'élément d'étanchéité (5) dans la région de la fente (9), le rapport ayant de préférence approximativement une plage de valeurs comprise entre 4/1 et 6/1.
